# EUROPÄISCHE PATENTSCHRIFT

(11) **EP 2 454 017 B1**
(45) Veröffentlichungstag und Bekanntmachung des Hinweises auf die Patenterteilung: **18.03.2015**
(21) Anmeldenummer: 10734474.9
(22) Anmeldetag: 06.07.2010
(51) Int. Cl.: C08F 2/54, C08F 2/46, C08F 290/06

(54) **REAKTIV-SYSTEME**
REACTIVE SYSTEMS
SYSTÈMES RÉACTIFS

(30) Priorität: 16.07.2009 DE 102009026185
(43) Veröffentlichungstag der Anmeldung: 23.05.2012
(73) Patentinhaber: Elantas GmbH, 46483 Wesel (DE)
(72) Erfinder: LIENERT, Klaus-Wilhelm, 22763 Hamburg (DE); VOEDISCH, Sabine, 22335 Hamburg (DE); AL-MASRI, Majdi, 21244 Buchholz (DE); BERKEI, Michael, 45721 Haltern am See (DE); TECKLENBRUG, Janin, 46119 Oberhausen (DE); SAWITOWSKI, Thomas, 46483 Wesel (DE)
(74) Vertreter: Fitzner, Uwe
(86) Internationale Anmeldenummer: PCT/EP2010/059650
(87) Internationale Veröffentlichungsnummer: WO 2011/006798

(56) Entgegenhaltungen:
- GB-A- 1 138 793
- US-A- 4 232 141
- US-A- 4 376 719

## Beschreibung

Die vorliegende Erfindung betrifft disperse Systeme, die durch Energiezufuhr aktiviert werden können, sowie eine umweltfreundliche Zubereitung, die ein geringes Gefahrenpotential hat und Verfahren zu deren Herstellung. Die vorliegende Erfindung betrifft ebenfalls die Verwendung als z.B. Polymerisationsinitiator, Härter und Vernetzer in der Kunststoffindustrie, sowie ein Verfahren zur kontrollierten Reaktionsführung.

### Stand der Technik:

Als Polymerisationsinitiatoren in der Kunststoffindustrie sowie als Härter und Vernetzer in vielen Anwendungen werden Peroxide eingesetzt (Römpp Chemie Lexikon, 1991, S. 3297). Peroxide spalten bei erhöhter Temperatur und bilden Radikale, die die Polymerisation von C-C-Doppelbindungen in Acrylaten, Methacrylaten, Styrol, Vinyltoluol, sowie Copolymerisationen, wie z.B. zwischen der Malein- oder Fumarsäuredoppelbindung mit Styrol starten. Kobalt(II)salze wirken als Beschleuniger und katalysieren den Zerfall.

Organische Peroxide enthalten eine oder mehrere Peroxidgruppen -O-O-. Diese Bindung ist nicht stabil, zerfällt exotherm und gibt 180 - 350 KJ/mol Wärme ab, was zu einer (adiabatischen) Temperaturerhöhung von 400° - 800°C führt. Dadurch ist der Umgang mit Peroxiden nicht ungefährlich. Wegen des großen Gefahrenpotentials hat der Gesetzgeber Lagerung und Transport restriktiv geregelt. Details sind den jeweils gültigen Vorschriften zu entnehmen.

In der DE 2 632 294 wird die Herstellung verschiedener Benzpinakolsilylether und deren Verwendung als Polymerisationsinitiatoren beschrieben. Diese Stoffe wirken ähnlich Peroxiden, haben aber nicht deren Gefahrenpotential. Die Wirkung als Radikalstarter beruht auf der homolytischen Spaltung der extrem langen tetraphenyl substituierten C-C-Einfachbindung. Zum Unterschied zu Peroxiden ist die Spaltung endotherm und falls kein Monomer als Reaktionspartner vorhanden ist, auch reversibel. Benzpinakolsilylether sind aufwendig herzustellen und dadurch teuer.

Benzpinakol selbst kann auch als Radikalstarter für die Polymerisation von ungesättigten Polyesterharzen verwendet werden (Heinrich Wolfers et al. in "Die Makromolekulare Chemie", 1979 180, 3, S. 649-655). Allerdings ist Benzpinakol in den zu polymerisierenden Systemen sehr schlecht löslich und sedimentiert. Homogene Werkstoffe sind damit schwer erhältlich.

Dies stand bisher einer industriellen Anwendung entgegen.

### Aufgabe:

Aufgabe der vorliegenden Erfindung war es, Systeme oder Formulierungen bereitzustellen, die die Nachteile des Stand der Technik nicht aufweisen, bzw. besonders sichere Handhabung ermöglichen.

Die vorliegende Erfindung hat sich ferner zur Aufgabe gestellt, eine Zubereitung zu entwickeln, die nicht sedimentiert und ungesättigte Systeme unter dem Einfluss von Wärme polymerisiert, beziehungsweise vernetzt. Außerdem soll sie ein geringeres Gefährdungspotenzial im Vergleich zu den Peroxiden besitzen. Formulierungen die diese Zubereitung enthalten sollen sich durch eine verbesserte Topfzeit auszeichnen.

### Lösung:

Die Aufgabe wird durch ein disperses Reaktiv-System, bei dem eine Komponente (I) in feinstverteilter Form in einer Komponente (II), mit der die Komponente (I) nach Aktivierung durch Energiezufuhr reagieren kann, vorliegt, wobei Komponente (I) in Komponente (II) nicht löslich ist, Verfahren zur Herstellung der Zusammensetzungen, Verfahren zur Reaktionskontrolle und die entsprechenden Verwendungen, gelöst.

### Begriffsdefinitionen:

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Zimmertemperatur" eine Temperatur von 23°C. Temperaturangaben sind, soweit nicht anders angegeben, in Grad Celsius (°C).

Sofern nichts anderes angegeben wird, werden die angeführten Reaktionen bzw. Verfahrensschritte bei Normaldruck/Atmosphärendruck, d.h. bei 1013 mbar, durchgeführt.

Unter aktinischer Strahlung wird hier und im folgenden elektromagnetische Strahlung, wie Infrarot, nahes Infrarot, sichtbares Licht, UV-Strahlung oder Röntgenstrahlung, insbesondere UV-Strahlung, oder Korpuskularstrahlung, wie Elektronenstrahlung, verstanden.

Im Rahmen der vorliegenden Erfindung sind die Begriffe Lösemittel und Lösungsmittel synonym. Inerte Lösungsmittel im Rahmen der vorliegenden Erfindung sind solche, die nicht mit den Verbindungen reagieren, die die erfindungsgemäße Reaktivformulierung initiieren bzw. härten soll, d.h. die nicht in die entstehenden Produkte chemisch eingebaut werden, sondern physikalisch abtrennbar bleiben. Reaktive Lösungsmittel sind hingegen solche, die chemisch in die resultierenden Produkte eingebaut werden können.

Der Ausdruck (Meth)acryl soll im Rahmen der vorliegenden Erfindung sowohl Methacryl als auch Acryl bzw. Mischungen beider umfassen.

Unter C-C-labilen Verbindungen werden im Rahmen der vorliegenden Erfindung solche Verbindungen verstanden, die leicht spaltende C-C-Bindungen aufweisen, insbesondere eine C-C-Einfachbindung mit a) einer Länge zwischen 1,522 und 1,750 Angström (1 Angström = 10⁻¹⁰ m), b) einer Dissoziationsenergie im Bereich von 50 bis 369 kJ/mol aufweisen, und die c) bei einer Temperatur von 60 bis 150°C (bei 1,013 bar) homolytisch spaltet.

Im Rahmen der vorliegenden Erfindung werden die Begriffe "Aktivator", "Initiator", "Katalysator" und "Monomer" verstanden, wie sie in Römpp Chemie Lexikon, 9. Auflage, Thieme Verlag, Stichworte "Aktivatoren" (Seite 81), "Initiatoren" (Seiten 1985, 1986), "Katalysatoren" (Seiten 2169, 2170) und "Monomere" (Seite 2847) definiert werden.

Der Begriff "Monomere" umfaßt im Rahmen der vorliegenden Erfindung auch "Reaktivverdünner", wie sie in Römpp Lexikon Lacke und Druckfarben, 1998, Thieme Verlag, Stichwort "Reaktivverdünner", Seite 491, 492 definiert sind.

Im Rahmen der vorliegenden Erfindung umfassen die verwendeten Begriffe "Reaktiv-System" bzw. "Reaktivformulierung" Systeme bzw. Formulierungen, die nach Energiezufuhr chemisch reagieren können.

Aktivierung durch Energiezufuhr bedeutet, dass eine höhere thermische Energie als Raumtemperatur notwendig ist und/oder dass die Umgebungsstrahlung (Licht, UV, natürliche Radioaktivität etc.) nicht ausreichend ist, sondern mittels aktinischer Strahlung Energie zusätzliche zugeführt werden muss.

Die Teilchengrößen sind im Rahmen der vorliegenden Erfindung, sofern nichts anderes angegeben ist, als mittels Akustospektrometrie, insbesondere mittels DT-Spektrometer DT-1200 der Quantachrome GmbH & Co. KG, bestimmte Teilchengrößen anzusehen.

### Detaillierte Beschreibung:

Erfindungsgemäß wird ein disperses Reaktiv-System, zur Verfügung gestellt bei dem mindestens eine Komponente (I) enthaltend oder bestehend aus Teilchen einer Größe zwischen 5 nm und 500 µm, bevorzugt zwischen 1 µm und 300 µm, in feinstverteilter Form in einer flüssigen Phase aus mindestens einer weiteren Komponente (II), mit der die Komponente (I) nach Aktivierung durch Energiezufuhr reagieren kann, vorliegt, wobei Komponente (I) in Komponente (II) nicht löslich ist.

Erfindungsgemäß wird weiterhin eine Reaktivformulierung zur Verfügung gestellt, die durch eine feinstverteilte feste reaktive Komponente in einer flüssigen Komponente gekennzeichnet ist (Dispersion). Dabei ist die fein verteilte feste reaktive Komponente mindestens eine Verbindung, die C-C-labile Bindungen aufweist. Diese Reaktivformulierung ist ein Beispiel für Komponente (I) des dispersen Reaktiv-Systems.

Erfindungsgemäß wurde auch ein Verfahren zur kontrollierten Reaktionsführung gefunden, bei dem man ein disperses Reaktiv-System herstellt, indem man
a) mindestens eine durch Energiezufuhr aktivierbare Komponente (I) aus Teilchen einer Größe zwischen 5 nm und 500 µm, bevorzugt zwischen 1 µm und 300 µm, in
b) einer flüssigen Phase aus mindestens einer weiteren Komponente (II), mit der die durch Energiezufuhr aktivierbare Komponente (I) nach Aktivierung reagieren kann und in der sie nicht löslich ist,
feinst verteilt.

Die erfindungsgemäßen dispersen Reaktiv-Systeme sind dadurch gekennzeichnet dass
a) mindestens eine Komponente (I) enthaltend oder bestehend aus Teilchen einer Größe zwischen 5 nm und 500 µm, bevorzugt zwischen 1 µm und 300 µm, in feinstverteilter Form
b) in einer flüssigen Phase aus mindestens einer weiteren Komponente (II), mit der die Teilchen der Komponente (I) nach Aktivierung durch Energiezufuhr reagieren können, vorliegt,
c) wobei die Teilchen der Komponente (I) in Komponente (II) nicht löslich ist.

Die Komponente (I) kann bevorzugt aus der Gruppe bestehend aus
- Initiatoren für chemische Reaktionen, bevorzugt Polymerisationen, Polyadditionen, Polykondensationen,
- Aktivatoren für chemische Reaktionen,
- Katalysatoren für chemische Reaktionen,
- Monomeren für Polymerisationen, Polyadditionen, Polykondensationen und Gemischen davon
ausgewählt werden.

Dem Fachmann ist hinreichend bekannt, welche Initiatoren, Aktivatoren, Katalysatoren bzw. Monomere für den jeweiligen Zweck geeignet sind; sie müssen daher hier nicht im Einzelnen aufgezählt werden. Einzige Bedingungen sind, dass sie als feinstverteilte Teilchen in der Komponente (II) vorliegen müssen und in der Komponente (II) nicht löslich sind.

Bevorzugt bedeutet im Rahmen der vorliegenden Erfindung der Begriff "nicht löslich" dass die Teilchen der Komponente (I) sich in der Komponente (II) zu maximal 1 Gew.-%, bevorzugt maximal 0.1 Gew.-% lösen.

Es ist bevorzugt, wenn die Komponente (I) aus der Gruppe bestehend aus
- Initiatoren für chemische Reaktionen, bevorzugt Polymerisationen, Polyadditionen, Polykondensationen,
- Aktivatoren für chemische Reaktionen,
- Katalysatoren für chemische Reaktionen,
- Monomeren für Polymerisationen, Polyadditionen, Polykondensationen und Gemischen davon oder
der erfindungsgemäßen Reaktivformulierung besteht.

Die Energiezufuhr der dispersen Reaktiv-Systeme der vorliegenden Erfindung erfolgt bevorzugt durch aktinische Strahlung und/oder thermische Energie.

Es ist prinzipiell aber auch möglich die Energie durch mechanische Energie einzutragen.

Die Komponente (I) kann dabei von vornherein feinstteilig,d.h. in einer Größe zwischen 5 nm und 500 µm, bevorzugt zwischen 1 µm und 300 µm, vorliegen, oder aber bei oder nach der Einarbeitung in Komponente (II) zu Teilchen einer Größe zwischen 5 nm und 500 µm, bevorzugt zwischen 1 µm und 300 µm, verarbeitet werden.

Dabei ist es bevorzugt, die Komponente (I) erst bei oder nach dem Eintrag in Komponente (II) zu Teilchen einer Größe zwischen 5 nm und 500 µm, bevorzugt zwischen 1 µm und 300 µm, zu verarbeiten, da auf diese Weise eine Aggregierung oder Sedimentierung der Komponente (I) vermieden wird. Wird die Verarbeitung zu Teilchen einer Größe zwischen 5 nm und 500 µm, bevorzugt zwischen 1 µm und 300 µm, mittels Mahlen oder ähnlicher Verfahren in Gegenwart der Komponente (II) vorgenommen, wird auf diese Weise auch die entstehende (Reibungs-)Wärme abgeführt, so dass keine frühzeitige Reaktion oder unerwünschte Nebenreaktionen erfolgen.

Die Komponente (II) des erfindungsgemäßen Reaktiv-Systems wird bevorzugt ausgewählt aus der Gruppe bestehend aus
(i) mindestens einem Polymer,
(ii) einem oder mehreren Monomer(en) oder Monomergemisch(en) oder
(iii) einem Gemisch aus Monomer(en) und Polymer(en).

Für den Fall, dass sowohl Komponente (I) als auch (II) Monomere darstellen bzw. enthalten, gelten für die Monomere der Komponente (I) dennoch die genannten Bedingungen: die Monomere der Komponente (I) dürfen sich nicht in den Monomeren der Komponente (II) lösen und weisen eine Größe zwischen 5 nm und 500 µm, bevorzugt zwischen 1 µm und 300 µm, auf.

In einer Variante der vorliegenden Erfindung kann Komponente (II) zusätzlich zu (i), (ii), und (iii) mindestens ein Lösungsmittel enthalten, mit der Maßgabe, dass das Lösungsmittel die Teilchen der Komponente (I) nicht löst.

Die hierfür verwendbaren Lösungsmittel sind demgemäß abhängig davon, welche Komponente (I) verwendet wird; sie können vom Fachmann aufgrund seines Fachwissen in einfachster Weise ausgewählt werden, oder sofern der Fachmann nicht sicher ist, ob das gewünschte Lösungsmittel die Teilchen der Komponente (I) löst oder nicht, anhand einfachster Vorversuche ermittelt werden.

In einer Variante der vorliegenden Erfindung kann Komponente (II) demgemäß aus einer Mischung aus Monomer(en), Polymer(en) und/oder Lösungsmittel(n), welche die Teilchen der Komponente (I) nicht löst, bestehen.

Die erfindungsgemäßen Reaktiv-Systeme werden dabei durch Verfahren hergestellt, bei dem die Komponente (I) und die Komponente (II) miteinander gemischt werden, wobei die Teilchen der Komponente (I) entweder vor dem Vermischen, bei dem Vermischen oder nach dem Vermischen mit Komponente (II) hergestellt werden, bevorzugt durch Mahlen.

Durch die feine Verteilung der Komponente (I) in Komponente (II) können die Stoffe bei Aktivierung sehr schnell und gleichmäßig abreagieren.

Die Nachteile des Stand der Technik, wie z.B. Trommsdorff-Norrish-Effekt, werden dabei vermieden.

Durch die erfindungsgemäßen Reaktiv-Systeme ist es ebenfalls möglich, auf toxische Lösungsmittel für bestimmte Stoffe zu verzichten, da sie im Rahmen der vorliegenden Erfindung durch weniger toxische Lösungsmittel ersetzt werden können, die im Normalfall aufgrund dessen, dass sie Komponente (II) nicht lösen können, nicht als Lösungsmittel verwendet werden konnten.

In einer Variante der vorliegenden Erfindung wird als Komponente (I) die erfindungsgemäße Reaktivformulierung, wie sie weiter unten beschrieben ist, eingesetzt.

In dem erfindungsgemäßen Verfahren zur Herstellung der Reaktivformulierung werden Kristalle mindestens einer Verbindung, die vorzugsweise C-C-labile Bindungen aufweist, zu äußerst feinen Partikeln vermahlen. Diese Partikel können in verschiedenen Monomeren, ungesättigten Harzen und komplexen ungesättigten Formulierungen dispergiert werden, ohne dass es zu einer Trübung oder Sedimentation kommt.

Erfindungsgemäß umfaßt sind auch Zubereitungen bestehend aus miteinander zu reagierenden Stoffen und der erfindungsgemäßen Reaktivformulierung, so dass wenigstens ein Reaktionspartner (vorzugsweise Verbindung(en), die C-C-labile Bindungen enthält/enthalten) als fein dispergierter Feststoff vorliegt.

In diesen Zubereitungen wird die chemische Reaktion durch thermische oder auch sonstige Aktivierung, bevorzugt durch thermische Aktivierung, des dispergierten Feststoffes gestartet. Diese Zubereitungen sind Beispiele für erfindungsgemäße Reaktiv-Systeme.

Die erfindungsgemäße Reaktivformulierung ist hervorragend dazu geeignet, polymerisierbare Massen zu polymerisieren, zu härten und/oder zu vernetzen.

Die erfindungsgemäße Reaktivformulierung kann als Polymerisationsinitiator, als Härter und/oder Vernetzer verwendet werden, insbesondere in der Kunststoffindustrie.

Die erfindungsgemäße Reaktivformulierung besteht aus
- Komponente (A) bestehend aus mindestens einer Verbindung, die wenigstens eine C-C-labile Bindung aufweist,
- Komponente (B) bestehend aus einem Lösemittel oder Lösemittelgemisch in dem die Komponente (A) nicht löslich ist,
- gegebenenfalls Komponente (C) bestehend aus einem oder mehreren Dispergierhilfsmitteln für die Komponente (A),
wobei die Verbindung (A) als dispergierter Feststoff mit einer Teilchengröße zwischen 5 nm und 500 µm, bevorzugt zwischen 1 µm und 300 µm, vorliegt.

Bevorzugt bedeutet im Rahmen der vorliegenden Erfindung der Begriff "nicht löslich" dass die Komponente (A) sich in der Komponente (B) zu maximal 1 Gew.-%, bevorzugt maximal 0.1 Gew.-% löst.

Es ist ein wesentliches Merkmal der vorliegenden Erfindung, dass durch die äußerst feine Form der Komponente (A) diese leicht dispergiert werden und dann mit den Komponenten (B) und gegebenenfalls (C) eine stabile Dispersion bilden kann.

Die Komponente (A) besteht aus einer Verbindung mit einer labilen C-C-Bindung, die unter dem Einfluss von Wärme oder aktinischer Strahlung, insbesondere Wärme, gespalten wird.

Erfindungsgemäß verwendbare Verbindungen sind Verbindungen der allgemeinen Formel 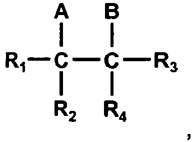 worin die Variablen jeweils unabhängig voneinander die folgenden Bedeutungen haben:
- R₁ und R₃: aromatische Reste, die durch C₁-C₆-Alkylreste und/oder Halogen ein- bis fünffach substituiert sein substituiert sein können, bevorzugt Phenyl, Methyl, tert.-Butyl,
- R₂ und R₄: Wasserstoff, aromatische Reste, die durch C₁-C₆-Alkylreste und/oder Halogen ein- bis fünffach substituiert sein können, oder aliphatische Reste,
bevorzugt Phenyl oder Wasserstoff
- A und B: Hydroxyl, C₁-C₄-Alkoxyrest, C₁-C₆-Alkylrest und/oder Halogen, bevorzugt Hydroxyl oder Methyl bedeuten,
bevorzugt hochsubstituierte Ethanderivate, insbesondere 1,1,2,2-Tetraphenylethandiol (Benzpinakol), an den Benzolkernen substituierte

Benzpinakole, 1,2-ditert-Butylethandiol und dessen Derivate, 2,3-Dimethyl-2,3-diphenylbutan, und Poly-1,4-diisopropylbenzol.

Weitere Beispiele für erfindungsgemäß verwendbare hochsubstituierte Ethanderivate sind p,p'-Dimethylbenzpinakol, p,p'-Diphenylbenzpinakol, 1,2-Dihydroxy-1,2-dimethyl-1,2diphenylethan, 1,2-Methoxytetraphenylethan.

Am meisten bevorzugt für die Komponente (A) ist im Rahmen der vorliegenden Erfindung Benzpinakol.

Besonders bevorzugt sind erfindungsgemäß Verbindungen, die bei Temperaturen zwischen 80 und 150°C, insbesondere zwischen 100 und 130°C einer homolytischen Bindungsspaltung unterliegen.

Als Komponente (B) wird ein Lösemittel oder Lösemittelgemisch eingesetzt. Bedingung ist, dass die Komponente (A) darin nicht löslich ist.

Das Lösemittel bzw. Lösemittelgemisch kann inert oder auch reaktiv sein und C-C-Doppelbindungen enthalten.

Als Lösemittel können verschiedene aromatenhaltige Destillationsschnitte, z. B. Solvesso 100, Solvesso 150, oder auch aromatenfreie Kohlenwasserstoffgemische, wie z.B. Shellsol D25, Shellsol D40 verwendet werden. Ebenfalls können Lösemittel auf Ester und Etherbasis verwendet werden. Als verwendbare reaktive Lösemittel seien Styrol, Vinyltoluol, Butylacrylat, Butylmethacrylat genannt.

Darüber hinaus ist dem Fachmann ohne weiteres klar, welche reaktiven Lösungsmittel (auch bekannt als Reaktivverdünner, reaktive Verdünnungsmittel,) er für das jeweils zu initiierende oder zu härtende Reaktionsgemisch auszuwählen hat, gegebenenfalls kann er dies unter Zuhilfenahme einschlägiger Fachliteratur tun, z.B. Römpp Lexikon "Lacke und Druckfarben", Stichwort "Reaktivverdünner".

Bevorzugt werden Solvesso 100, Solvesso 150, Shellsol D25, Shellsol D40 verwendet.

Erfindungsgemäß besonders bevorzugt ist Solvesso 100.

Die Komponente (C) besteht, sofern sie verwendet wird, aus einem oder mehreren Dispergierhilfsmitteln, die das Dispergieren der Komponente (A) erleichtern oder ermöglichen und die resultierende Dispersion stabilisieren. Additive, die als Dispergierhilfsmittel verwendet werden können, sind dem Fachmann bekannt und deren Einsatz gehört zum Stand der Technik.

Im einer Variante der vorliegenden Erfindung können als Dispergierhilfsmittel Salze von Polymeren mit sauren Gruppen (z.B. Disperbyk^{®} 106), niedrigmolekulare Polyacrylatsalze bzw. Salze von anderen Polycarbonsäuren, Phosphorsäureestersalze von hochmolekularen Copolymeren mit pigmentaffinen Gruppen (z.B. Disperbyk^{®} 145), hochmolekulare Block-Copolymere mit pigmentaffinen Gruppen (z.B. Disperbyk^{®} 2163, Disperbyk^{®} 2164) eingesetzt werden. Es sei weiterhin auf die Literatur der verschiedenen Hersteller von Dispergierhilfsmitteln verwiesen.

Es ist im Rahmen der vorliegenden Erfindung möglich, die verschiedenen Lösungsmittel in beliebiger Mischung zu verwenden. Ein Variante ist es dabei reaktive Lösungsmittel mit inerten Lösungsmitteln zu vermischen.

Die Herstellung der erfindungsgemäßen Reaktivformulierung erfolgt bevorzugt nach dem erfindungsgemäßen Verfahren, bei dem
a) die drei Komponenten gemischt und dann
b) gemahlen werden bis eine Dispersion erhalten wird, in der die Komponente (A) in einer Teilchengröße zwischen 5 nm und 500 µm, bevorzugt zwischen 1 µm und 300 µm, vorliegt.

Zum Mahlen der Komponente (A) werden im Rahmen der vorliegende Erfindung bevorzugt Mühlen verwendet, es sind aber auch beliebige andere dem Fachmann als geeignet bekannt Mahlwerkzeuge einsetzbar.

Die erfindungsgemäße Reaktivformulierung wird bevorzugt hergestellt aus
- 30 - 50 Gew.-%, bevorzugt 35 - 45 Gew.-%, besonders bevorzugt 38 - 42 Gew.-% C-C-labiler Verbindung (Komponente (A)),
- 25 - 70 Gew.-%, bevorzugt 35 - 60 Gew.-%, besonders bevorzugt 40 - 50 Gew.-% Lösemittel oder Lösemittelgemisch (Komponente (B)) und
- 0 - 25 Gew.-%, bevorzugt 5 - 20 Gew.-%, besonders bevorzugt 10 - 18 Gew.-% eines oder mehrerer Dispergierhilfsmittel (Komponente (C)).

Die erfindungsgemäße Reaktivformulierung wird durch die in der Praxis übliche Vorgehensweise mit polymerisierbaren bzw. härtbaren Komponenten gemischt und bei erhöhter Temperatur und/oder Zuführung aktinischer Strahlung zur Reaktion gebracht.

Da es sich bei der erfindungsgemäßen Reaktivformulierung, sowie den erfindungsgemäßen Reaktiv-Systemen um mikroskopisch heterogene Systeme handelt, greift die Arrheniusgleichung nicht und die formulierten Produkte zeichnen sich durch eine verbesserte Lagerstabilität aus im Vergleich zu konventionellen Formulierungen, die z.B. 1 % Peroxid enthalten.

Durch die Einarbeitung bzw. Zugabe der erfindungsgemäßen Reaktivformulierungen in härtbare Zusammensetzungen werden Zusammensetzungen erhalten, die gefahrlos handhabbar sind, eine ausgezeichnete Lagerstabilität aufweisen und dennoch schnell und gleichmäßig aushärten, wenn sie erwärmt werden.

Durch die erfindungsgemäßen Reaktivformulierungen ist es ebenfalls möglich, auf toxische Lösungsmittel für bestimmte Stoffe zu verzichten, da diese im Rahmen der vorliegenden Erfindung durch weniger toxische Lösungsmittel ersetzt werden können, die im Normalfall aufgrund dessen, dass sie Komponente (A) nicht lösen können, nicht als Lösungsmittel verwendet würden.

Die erfindungsgemäße Reaktivformulierung wird bevorzugt in Zusammensetzungen eingearbeitet, deren Vernetzungs- oder Härtungsreaktion auf der Reaktion von olefinisch ungesättigten Doppelbindungen, z.B. Vinyl- oder (Meth)acrylat(gruppen) enthaltende Zusammensetzungen oder Zusammensetzungen enthaltend ungesättigte Polyester, beruht.

Ganz besonders bevorzugt ist es, die erfindungsgemäße Reaktivformulierung in Zusammensetzungen enthaltend ungesättigte Polyester einzuarbeiten.

Die erfindungsgemäße Reaktivformulierung eignet sich auch als Polymerisationsinitiator zur Herstellung einfacher, d.h. nicht vernetzter Polymere.

Die erfindungsgemäße Reaktivformulierung kann in der Kunststoffindustrie und/ oder in der Elektroindustrie zur Härtung bzw. Vernetzung polymerisierbarer Massen, bevorzugt Tränk- und Gießharzen, verwendet werden.

Gegenstand der vorliegenden Erfindung sind demnach auch Zusammensetzungen enthaltend die erfindungsgemäße Reaktivformulierung, und polymerisierbare bzw. härtbare Verbindungen.

Die erfindungsgemäße Reaktivformulierung ist ein universell einsetzbarer Radikallieferant.

Das erfindungsgemäße disperse Reaktiv-System kann in einer weiteren Ausgestaltung ein oder mehrere Hilfsstoff enthalten, wie sie für die jeweilige Anwendung üblich sind, z.B. Lackhilfsstoffe oder ähnliches.

Es ist möglich, die dispersen Systeme der vorliegenden Erfindung durch Zugabe zusätzlicher stabilisierender Bestandteile latent reaktiv zu machen, d.h. die Systeme werden durch Energiezufuhr aktiviert und sind dann aufgrund des stablisierenden Zusatzes trotz der Aktivierung noch für einen gewissen Zeitraum (meta)stabil. In dieser Ausführungsform können die Systeme dann zu einer weiteren Komponente gegeben werden, die dann mit diesen reagiert (in der Art von Mehrkomponentensystemen).

Das Prinzip der vorliegenden Erfindung ist es, dass an sich unlösliche Stoffe, die durch Energiezufuhr aktiviert werden können, dispers verteilt werden, so dass zwar reaktive aber dennoch unter normalen Bedingungen (23°C, 1013 mbar Druck, Umgebungslicht) stabile Systeme entstehen. Diese Systeme erscheinen bei normaler/makroskopischer Betrachtung optisch homogen, sind jedoch mikroskopisch betrachtet heterogen.

Dass dies sehr gut und mit unterschiedlichsten Systemen funktioniert, war überraschend und wurde erst im Rahmen der vorliegenden Erfindung gefunden.

Es war überraschend, dass durch die vorliegende Erfindung Reaktiv-Systeme und Reaktivformulierungen erhalten werden konnten, welche die genannten Vorteile aufweisen, also unter anderem lagerstabil, umweltfreundlich realisierbar, leicht herstellbar sind und trotzdem hervorragende Reaktionsergebnisse bzw. Produkte liefern.

Die Teilchenverteilungen der unlöslichen Komponenten (I) bzw. (A) können im Rahmen der vorliegenden Erfindung mono-, bi- oder polymodal, bevorzugt mono oder bimodal, sein.

In der vorliegenden Erfindung hat die Komponente (A) eine Teilchengröße zwischen 5 nm und 500 µm, bevorzugt zwischen 1 µm und 300 µm und eine bimodale Teilchenverteilung mit Maxima bei ca. 10 µm und ca. 200 µm.

Die erfindungsgemäßen Reaktiv-Systeme sind universell verwendbar. Insbesondere für Polymerisationen, härtbare Systeme, katalytische Reaktionen. Sie können auch verwendet werden für polymeranaloge Reaktionen, chemische Stufenreaktionen bzw. einfache Reaktionen, d.h. nicht polymerisierend sind.

Die verschiedenen Ausgestaltungen der vorliegenden Erfindung, z.B. diejenigen der verschiedenen abhängigen Ansprüche, können dabei in beliebiger Art und Weise miteinander kombiniert werden.

Die Erfindung wird nun unter Bezugnahme auf die folgenden nicht-limitierenden Beispiele erläutert.

### Beispiel 1 Herstellung einer Dispersion 1 von Benzpinakol

In einer 100 mL Weithalsglasflasche wurden 23 g Solvesso 100 eingewogen. Unter Rühren bei niedrigen Umdrehungsgeschwindigkeiten mittels Dispermaten wurden 7 g Disperbyk® 106 als Dispergieradditiv zudosiert und solange weiter gerührt, bis sich das Additiv vollständig gelöst hatte. Anschließend wurden 20 g Benzpinakol ebenfalls langsam unter Rühren zugefügt und solange weitergerührt, bis sich eine homogene Masse gebildet hatte. Im Anschluss wurden 80 g Glasperlen von 1 mm Durchmesser zugegeben und die Glasflasche zugeschraubt. Die Dispergierung erfolgte in einem Rüttler (Modell: "Disperser DAS H 200-K" der Firma Lau GmbH). Nach der Dispergierung wurden die Glasperlen über ein 240 µm Schnellsieb abfiltriert und die Dispersion in Glasflaschen gelagert.

### Beispiel 2 Herstellung einer Dispersion 2 von Benzpinakol

Verfahren wie in Beispiel 1 nur mit folgender Zusammensetzung - 16,7 g Solvesso 100, 6 g Disperbyk® 145 und 20 g Benzpinakol.

### Beispiel 3 Herstellung einer Dispersion 3 von Benzpinakol

Verfahren wie in Beispiel 1 nur mit folgender Zusammensetzung - 24 g Solvesso 100, 13,3 g einer Lösung von Disperbyk® 2163 (45 %-ig in Butylacetat/Methoxypropylacetat) und 20 g Benzpinakol.

### Beispiel 4 Herstellung einer Dispersion 4 von Benzpinakol

Verfahren wie in Beispiel 1 nur mit folgender Zusammensetzung - 20 g Solvesso 100, 10 g einer Lösung von Disperbyk® 2164 (60 %-ig in Butylacetat/ Methoxypropylacetat) und 20 g Benzpinakol.

### Beispiel 5 Herstellung einer härtbaren Mischung 1

2,5 g der Dispersion 1, 2,0 g Styrol und 97 g Dobeckan® FT 1018 (ungesättigter styrolischer Polyester auf Basis Maleinsäure/Neopentylglykol, 67%-ig in Styrol) wurden gemischt. Es resultierte eine klare, lagerstabile Mischung. Die Gelzeit der Mischung, bestimmt im Geltimer/Fa. Gelnorm bei 100°C betrug 11,8 Minuten. Nach einer Lagerzeit von 1 Monat betrug die Gelzeit 10,2 Minuten.

### Beispiel 6 Herstellung einer härtbaren Mischung 2

2,5 g der Dispersion 2, 2,0 g Styrol und 97 g Dobeckan® FT 1018 wurden gemischt. Es resultierte eine klare, lagerstabile Mischung. Die Gelzeit der Mischung bei 100°C betrug 12,9 Minuten. Nach einer Lagerzeit von 1 Monat betrug die Gelzeit 10,8 Minuten.

### Beispiel 7 Herstellung einer härtbaren Mischung 3

2,5 g der Dispersion 3, 2,0 g Styrol und 97 g Dobeckan® FT 1018 wurden gemischt. Es resultierte eine klare, lagerstabile Mischung. Die Gelzeit der Mischung bei 100°C betrug 12,5 Minuten. Nach einer Lagerzeit von 1 Monat betrug die Gelzeit 11,2 Minuten.

### Beispiel 8 Herstellung einer härtbaren Mischung 4

2,5 g der Dispersion 4, 2,0 g Styrol und 97 g Dobeckan® FT 1018 wurden gemischt. Es resultierte eine klare, lagerstabile Mischung. Die Gelzeit der Mischung bei 100°C betrug 13,4 Minuten. Nach einer Lagerzeit von 1 Monat betrug die Gelzeit 11,0 Minuten.

### Beispiel 9 Herstellung einer peroxidhaltiden härtbaren Mischung 5 (Vergleichsbeispiel 1)

1 g tert-Butylperbenzoat, 2,0 g Styrol und 97 g Dobeckan® FT 1018 wurden gemischt. Es resultierte eine klare Lösung. Die Gelzeit der Lösung bei 100°C betrug 22,5 Minuten. Nach einer Lagerzeit von 1 Monat betrug die Gelzeit 19,7 Minuten.

### Beispiel 10 Herstellung einer benzpinakolsilyletherhaltigen härtbaren Mischung 6 (Vergleichsbeispiel 2)

1,4 g eines handelsüblichen Benzpinakolsilylethers, 2,0 g Styrol und 97 g Dobeckan® FT 1018 wurden gemischt. Es resultierte eine klare Lösung. Die Gelzeit der Lösung bei 100°C betrug 5,6 Minuten. Nach einer Lagerzeit von 1 Monat betrug die Gelzeit 5,2 Minuten.

### Beispiel 11 Herstellung härtbarer Mischungen 7a, 7b, 7c, 7d, 7e, 7f

1 g der Dispersion 1 und 99 g Sartomer® 9020 (propoxyliertes Glycerintriacrylat) wurden gemischt. Es resultierte eine klare, lagerstabile Mischung. Die Gelzeit der Mischung bei 100°C betrug 8,5 Minuten. Nach einer Lagerzeit von 1 Monat betrug die Gelzeit 8,9 Minuten (7a).

Bei Verwendung der Dispersionen 2, 3 und 4 statt der Dispersion 1, resultierten Gelzeiten von 9,9 Minuten, 8,3 Minuten und 7,8 Minuten und nach einem Monat 11,5 Minuten, 9,8 Minuten und 8,4 Minuten (7b, 7c, 7d).

Die Vergleichsbeispiele mit einerseits 1 g tert-Butylperbenzoat (7e) und andererseits 1,4 g eines handelsüblichen Benzpinakolsilylethers (7f) in 99 g Acrylat ergaben Gelzeiten von 14,1 und 3,4 Minuten und nach einem Monat 14,2 und 3,5 Minuten.

### Beispiel 12 Formulierungen der Dispersionen, sowie des Peroxides und des Benzpinakolsilylethers mit Triethylenglykoldivinylether

Es wurden jeweils 2,5 g der Dispersionen 1, 2, 3 und 4 mit jeweils 99 g Triethylenglykoldivinylether gemischt. Man erhielt klare Mischungen die sich nicht härten ließen. Eine messbare Gelzeit wurde nicht erhalten.

Mischungen von einerseits 1 g tert-Butylperbenzoat und andererseits 1,4 g eines handelsüblichen Benzpinakolsilylethers mit 99 g Triethylenglykoldivinylether ergaben ebenfalls keine härtbare Mischungen. Eine radikalische Homopolymerisation fand in allen Fällen nicht statt.

### Beispiel 13 Lagerung der Mischungen 1 bis 6 bei 50°C

Die Mischungen 1 bis 6 wurden in einem verschlossenen Gefäß in einem üblichen Umluftwärmeschrank bei 50°C gelagert. Die Mischung 6 mit dem Benzpinakolsilylether war nach 3 Tagen geliert. Die Mischung 5 mit dem tert-Butylperbenzoat gelierte nach 6 Tagen.

Die Mischungen 1 bis 4 waren auch nach 15 Tagen unverändert.

Ein Anstieg der Viskosität der Formulierung mit feinstteiliger Verbindung, die C-C-labile Bindungen aufweist, ist in den Versuchen nicht zu beobachten.

Die peroxidhaltigen Formulierungen zeigen im Gegensatz dazu alle einen Viskositätsanstieg, der auf einen bei Raumtemperatur stattfindenden Peroxidzerfall und einsetzender Polymerisation beruht.

Analog zu den Peroxiden verhalten sich auch die Benzpinakolsilylether, da sie wie die Peroxide löslich in der Matrix sind.

## Patentansprüche

1. Reaktiv-System, **dadurch gekennzeichnet dass**
a mindestens eine Komponente (I) enthaltend oder bestehend aus Teilchen einer Größe zwischen 5 nm und 500 µm, i n feinstverteilter Form
b) in einer flüssigen Phase aus mindestens einer weiteren Komponente (II), mit der die Teilchen der Komponente (I) nach Aktivierung durch Energiezufuhr reagieren kann, vorliegt,
c) wobei die Teilchen der Komponente (I) in Komponente (II) nicht löslich sind.

2. Reaktiv-System nach Anspruch 1, **dadurch gekennzeichnet, dass** Komponente (I) aus der Gruppe bestehend aus
Initiatoren für chemische Reaktionen, bevorzugt Polymerisationen, Polyadditionen, Polykondensationen,
Aktivatoren für chemische Reaktionen,
Katalysatoren für chemische Reaktionen,
Monomeren für Polymerisationen, Polyadditionen, Polykondensationen und Gemischen davon ausgewählt wird.

3. Reaktiv-System nach einem der Ansprüche 1 oder 2, **dadurch gekennzeichnet, dass** die Energiezufuhr durch aktinische Strahlung und/oder thermische Energie erfolgt.

4. Reaktiv-System nach einem der Ansprüche 1 bis 3, **dadurch gekennzeichnet, dass** Komponente (II) aus der Gruppe bestehend aus
(i) mindestens einem Polymer,
(ii) einem oder mehreren Monomer(en) oder Monomergemisch(en) oder
(iii) einem Gemisch aus Monomer(en) und Polymer(en) ausgewählt wird.

5. Reaktiv-System nach einem der Ansprüche 1 bis 4, **dadurch gekennzeichnet, dass** Komponente (II) zusätzlich mindestens ein Lösungsmittel enthält, mit der Maßgabe, dass das Lösungsmittel die Teilchen der Komponente (I) nicht löst.

6. Reaktiv-System nach einem der Ansprüche 1 bis 5, **dadurch gekennzeichnet, dass** Komponente (II) aus einer Mischung aus Monomer(en), Polymer(en) und/oder Lösungsmittel(n), welche die Teilchen der Komponente (I) nicht löst, besteht.

7. Reaktivformulierung bestehend aus
(A) mindestens einer Verbindung, die wenigstens eine C-C-labile Bindung aufweist,
(B) einem Lösemittel oder Lösemittelgemisch, in dem die Komponente (A) nicht löslich ist, und
(C) gegebenenfalls einem oder mehreren Dispergierhilfsmitteln für die Komponente (A),
wobei die Verbindung (A) in (B) als dispergierter Feststoff mit einer Teilchengröße zwischen 5 nm und 500 µm vorliegt.

8. Reaktivformulierung nach Anspruch 7, bestehend aus
30 - 50 Gew.-%, bevorzugt 35 - 45 Gew.-%, besonders bevorzugt 38 - 42 Gew.-% Komponente (A),
25 - 70 Gew.-%, bevorzugt 35 - 60 Gew.-%, besonders bevorzugt 40 - 50 Gew.-% Komponente (B) und
0 - 25 Gew.-%, bevorzugt 5 - 20 Gew.-%, besonders bevorzugt 10 - 18 Gew.-% Komponente (C).

9. Reaktivformulierung nach Anspruch 7 oder 8, **dadurch gekennzeichnet, dass** für die Komponente (A) Verbindungen entsprechend der allgemeinen Formel 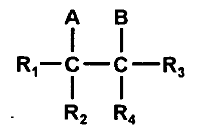 worin die Variablen jeweils unabhängig voneinander die folgenden Bedeutungen haben:
R₁ und R₃ = aromatische Reste, die durch Alkylreste und/oder Halogen ein- bis fünffach substituiert sein können,
R₂ und R₄ = Wasserstoff, aromatische Reste, die durch Alkylreste und/oder Halogen ein- bis fünffach substituiert sein können, oder aliphatische Reste,
A und B = Hydroxyl, C₁-C₄-Alkoxyrest und/oder Halogen bedeuten, bevorzugt 1,1,2,2-Tetraphenylethandiol, an den Benzolkernen substituierte Benzpinakole, 1,2-ditert.-Butylethandiol und dessen Derivate,
und/oder
2,3-Dimethyl-2,3-diphenylbutan, Poly-1,4-diisopropylbenzol eingesetzt werden.

10. Reaktivformulierung nach einem der Ansprüche 7 bis 9, **dadurch gekennzeichnet, dass** als Komponente (C) Verbindungen ausgewählt aus der Gruppe von Salzen von Polymeren mit sauren Gruppen, Phosphorsäureestersalzen von hochmolekularen Copolymeren mit pigmentaffinen Gruppen, hochmolekularen Block-Copolymere mit pigmentaffinen Gruppen und Gemischen daraus eingesetzt werden, und/oder **dadurch gekennzeichnet, dass** als Komponente (B) Lösungsmittel ausgewählt aus der Gruppe bestehend aus aromatenhaltigen Destillationsschnitten, aromatenfreien Kohlenwasserstoffgemischen, Estern, Ethern, Styrol, Vinyltoluol, Butylacrylat, Butylmethacrylat und Gemischen davon eingesetzt werden.

11. Verfahren zur Herstellung der Reaktivformulierung nach einem der Ansprüche 7 bis 10, **dadurch gekennzeichnet, dass**
a) die Komponenten (A), (B) und (C) miteinander gemischt und
b) dann gemahlen werden, bis eine Dispersion erhalten wird, in der die Komponente (A) in einer Teilchengröße von 5 nm bis 500 µm vorliegt.

12. Verwendung der Reaktivformulierung nach einem der Ansprüche 7 bis 10 in der Kunststoffindustrie und/oder in der Elektroindustrie zur Härtung polymerisierbarer Massen, bevorzugt Tränk- und/oder Gießharzen oder Lacken, insbesondere von Drahtlacken und Tränklacken.

13. Verwendung der Reaktiv-Systeme nach einem der Ansprüche 1 bis 6 in der Kunststoffindustrie und/oder in der Elektroindustrie, bevorzugt Tränk- und/oder Gießharzen oder Lacken, insbesondere Drahtlacken und Tränklacken.

14. Verfahren zur kontrollierten Reaktionsführung, bei dem man ein Reaktiv-System herstellt, indem man
a) mindestens eine durch Energiezufuhr aktivierbare Komponente (I) aus Teilchen einer Größe zwischen 5 nm und 500 µm in
b) einer flüssigen Phase aus mindestens einer weiteren Komponente (II), mit der die durch Energiezufuhr aktivierbare Komponente (I) nach Aktivierung reagieren kann und in der sie nicht löslich ist,
feinst verteilt.

15. Verfahren nach Anspruch 14, **dadurch gekennzeichnet, dass** die Verteilung durch Mahlen erfolgt.

16. Zusammensetzung enthaltend eine Reaktivformulierung gemäß einem der Ansprüche 7 bis 10 und polymerisierbare bzw. härtbare Verbindungen, wobei die Zusammensetzung bevorzugt einen Lack, insbesondere Drahtlack oder Tränklack, oder Tränkharz oder Gießharz, darstellt.

## Claims

1. Reactive system, **characterized in that**
a) at least one component (I) containing or consisting of particles between 5 nm and 500 µm in size, in very finely divided form
b) is present in a liquid phase of at least one further component (II) with which the particles of component (I) are capable of reacting following activation through energy supply,
c) wherein the particles of component (I) are not soluble in component (II).

2. Reactive system according to Claim 1, **characterized in that** component (I) is selected from the group consisting of
initiators for chemical reactions, preferably chain-growth addition polymerisations, step-growth addition polymerisations, condensation polymerisations,
activators for chemical reactions,
catalysts for chemical reactions,
monomers for chain-growth addition polymerisations, step-growth addition polymerisations, condensation polymerisations and mixtures thereof.

3. Reactive system according to Claim 1 or 2, **characterized in that** the energy supply is effected through actinic radiation and/or thermal energy.

4. Reactive system according to any one of Claims 1 to 3, **characterized in that** component (II) is selected from the group consisting of
(i) at least one polymer,
(ii) one or more monomers or monomer mixtures, or
(iii) a mixture of monomer(s) and polymer(s).

5. Reactive system according to any one of Claims 1 to 4, **characterized in that** component (II) additionally contains at least one solvent, with the proviso that the solvent does not dissolve the particles of component (I).

6. Reactive system according to any one of Claims 1 to 5, **characterized in that** component (II) consists of a mixture of monomer(s), polymer(s) and/or solvent(s) which does not dissolve the particles of component (I).

7. Reactive formulation consisting of
(A) at least one compound having at least one C-C-labile bond,
(B) a solvent or solvent mixture in which component (A) is not soluble, and
(C) optionally one or more dispersing assistants for component (A),
wherein compound (A) is present in (B) as a dispersed solid having a particle size between 5 nm and 500 µm.

8. Reactive formulation according to Claim 7, consisting of
30-50% by weight, preferably 35-45% by weight, more preferably 38-42% by weight of component (A),
25-70% by weight, preferably 35-60% by weight, more preferably 40-50% by weight of component (B), and
0-25% by weight, preferably 5-20% by weight, more preferably 10-18% by weight of component (C).

9. Reactive formulation according to Claim 7 or 8, **characterized in that** the component (A) comprises compounds conforming to the general formula 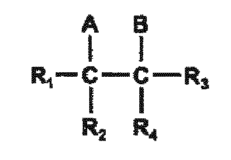 where the variables each independently have the following meanings:
R₁ and R₂ = aromatic radicals which may be substituted by alkyl radicals and/or halogen from one to five times,
R₂ and R₄ = hydrogen, aromatic radicals which may be substituted by alkyl radicals and/or halogen from one to five times, or aliphatic radicals,
A and B = hydroxyl, C₁-C₄ alkoxy and/or halogen, preferably 1,1,2,2-tetraphenylethanediol, benzopinacols substituted on the benzene nuclei, 1,2-di-tert-butylethanediol and its derivatives,and/or
2,3-dimethyl-2,3-diphenylbutane poly-1,4-diisopropylbenzene.

10. Reactive formulation according to any one of Claims 7 to 9, **characterized in that** component (C) comprises compounds selected from the group of salts of polymers having acidic groups, phosphoric ester salts of high molecular weight copolymers having groups with pigment affinity, high molecular weight block copolymers having groups with pigment affinity, and mixtures thereof and/or **characterized in that** component (B) comprises solvents selected from the group consisting of aromatics-containing distillation cuts, aromatics-free hydrocarbyl mixtures, esters, ethers, styrene, vinyltoluene, butyl acrylate, butyl methacrylate and mixtures thereof.

11. Process for preparing the reactive formulation according to any one of Claims 7 to 10, **characterized in that**
a) components (A), (B) and (C) are mixed with each other and
b) then ground to obtain a dispersion in which component (A) is present in a particle size of 5 nm to 500 µm.

12. Use of the reactive formulation according to any one of Claims 7 to 10 in the plastics industry and/or in the electrical engineering industry for curing polymerisable compositions, preferably impregnating and/or casting resins or varnishes, more particularly wire enamels and impregnating varnishes.

13. Use of the reactive systems according to any one of Claims 1 to 6 in the plastics industry and/or in the electrical engineering industry, preferably impregnating and/or casting resins or varnishes, more particularly wire enamels and impregnating varnishes.

14. Process for controlled reaction management, which process comprises preparing a reactive system by very finely dividing
a) at least one component (I) which is activatable through energy supply and is composed of particles between 5 nm and 500 µm in size in
b) a liquid phase of at least one further component (II) with which the component (I), activatable through energy supply, is capable of reacting following activation and in which it is not soluble.

15. Process according to Claim 14, **characterized in that** the dividing is effected by grinding.

16. Composition containing a reactive formulation according to any one of Claims 7 to 10 and polymerisable or curable compounds, wherein the composition constitutes a varnish, more particularly a wire enamel or impregnating varnish, or an impregnating resin or casting resin.

## Revendications

1. Système réactif, **caractérisé en ce que**
a) au moins un composant (I) contenant ou consistant en des particules ayant une taille comprises entre 5 nm et 500 µm est présent sous forme très finement divisée
b) dans une phase liquide à base d'au moins un autre composant (II), avec lequel les particules du composant (I) peuvent réagir après activation par apport d'énergie,
c) les particules du composant (I) n'étant pas solubles dans le composant (II).

2. Système réactif selon la revendication 1, **caractérisé en ce que** le composant (I) est choisi dans le groupe constitué par
des amorceurs de réactions chimiques, de préférence polymérisations, polyadditions, polycondensations,
des activateurs de réactions chimiques,
des catalyseurs de réactions chimiques,
des monomères pour polymérisations, polyadditions, polycondensations
et des mélanges de ceux-ci.

3. Système réactif selon l'une quelconque des revendications 1 et 2, **caractérisé en ce que** l'apport d'énergie s'effectue par rayonnement actinique et/ou énergie thermique.

4. Système réactif selon l'une quelconque des revendications 1 à 3, **caractérisé en ce que** le composant (II) est choisi dans le groupe constitué par
(i) au moins un polymère,
(ii) un ou plusieurs monomère(s) ou mélange(s) de monomères ou
(iii) un mélange de monomère(s) et polymère(s).

5. Système réactif selon l'une quelconque des revendications 1 à 4, **caractérisé en ce que** le composant (II) contient en outre au moins un solvant, étant entendu que le solvant ne dissout pas les particules du composant (I).

6. Système réactif selon l'une quelconque des revendications 1 à 5, **caractérisé en ce que** le composant (II) consiste en un mélange de monomère(s), polymère(s) et/ou solvant(s) ne dissolvant pas les particules du composant (I).

7. Formulation réactive constituée
(A) d'au moins un composé qui comporte au moins une liaison C-C labile,
(B) d'un solvant ou mélange de solvants, dans lequel le composant (A) n'est pas soluble, et
(C) éventuellement d'un ou de plusieurs adjuvants de dispersion pour le composant (A),
le composé (A) se trouvant dans (B) sous forme de solide dispersé ayant une taille de particule comprise entre 5 nm et 500 µm.

8. Formulation réactive selon la revendication 7, constituée de
30 - 50 % en poids, de préférence 35 - 45 % en poids, de façon particulièrement préférée 38 - 42 % en poids de composant (A),
25 - 70 % en poids, de préférence 35 - 60 % en poids, de façon particulièrement préférée 40 - 50 % en poids de composant (B) et
0 - 25 % en poids, de préférence 5 - 20 % en poids, de façon particulièrement préférée 10 - 18 % en poids de composant (C).

9. Formulation réactive selon la revendication 7 ou 8, **caractérisée en ce que** pour le composant (A) on utilise des composés correspondant à la formule générale 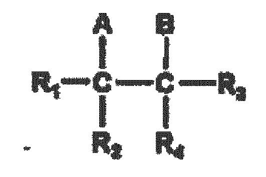 dans laquelle les variables ont chacune, indépendamment les unes des autres, les significations suivantes :
R₁ et R₃ = des radicaux aromatiques qui peuvent être une à cinq fois substitués par des radicaux alkyle et/ou des atomes d'halogène,
R₂ et R₄ = un atome d'hydrogène, des radicaux aromatiques qui peuvent être une à cinq fois substitués par des radicaux alkyle et/ou des atomes d'halogène, ou des radicaux aliphatiques,
A et B = un groupe hydroxy, un radical alcoxy en C₁-C₄ et/ou un atome d'halogène,
de préférence le 1,1,2,2-tétraphényléthanediol, des benzopinacols substitués sur les noyaux benzéniques, le 1,2-di-tert-butyléthanediol et ses dérivés, et/ou
le 2,3-diméthyl-2,3-diphénylbutane, le poly-1,4-diisopropylbenzène.

10. Formulation réactive selon l'une quelconque des revendications 7 à 9, **caractérisée en ce qu'**on utilise comme composant (C) des composés choisis dans le groupe des sels de polymères comportant des groupes acides, des sels d'esters d'acide phosphorique de copolymères de masse moléculaire élevée comportant des groupes à affinité pour les pigments, des copolymères séquencés de masse moléculaire élevée à affinité pour les pigments et des mélanges de ceux-ci, et/ou **caractérisée en ce qu'**on utilise comme composant (B) des solvants choisis dans le groupe constitué par des fractions de distillation contenant des composés aromatiques, des mélanges d'hydrocarbures exempts de composés aromatiques, des esters, des éthers, le styrène, le vinyltoluène, l'acrylate de butyle, le méthacrylate de butyle et des mélanges de ceux-ci.

11. Procédé pour la préparation de la formulation réactive selon l'une quelconque des revendications 7 à 10, **caractérisé en ce que**
a) on mélange entre eux les composants (A), (B) et (C) et
b) ensuite on broie ce mélange jusqu'à l'obtention d'une dispersion, dans laquelle le composant (A) se trouve en une taille de particule de 5 nm à 500 nm.

12. Utilisation de la formulation réactive selon l'une quelconque des revendications 7 à 10 dans l'industrie des matières plastiques et/ou dans l'industrie électrique, pour le durcissement de matières polymérisables, de préférence de résines d'imprégnation et/ou de coulée, ou de vernis, en particulier de vernis pour fils métalliques et vernis d'imprégnation.

13. Utilisation des systèmes réactifs selon l'une quelconque des revendications 1 à 6 dans l'industrie des matières plastiques et/ou dans l'industrie électrique, de préférence des résines d'imprégnation et/ou de coulée, ou des vernis, en particulier des vernis pour fils métalliques et vernis d'imprégnation.

14. Procédé pour la conduite contrôlée de réactions, dans lequel on prépare un système réactif en divisant très finement
a) au moins un composant (I) activable par apport d'énergie, à base de particules ayant une taille comprise entre 5 nm et 500 µm, dans
b) une phase liquide constituée d'au moins un autre composant (II), avec lequel le composant (I) activable par apport d'énergie peut réagir après activation et dans lequel il n'est pas soluble.

15. Procédé selon la revendication 14, **caractérisé en ce que** la division s'effectue par broyage.

16. Composition contenant une formulation réactive selon l'une quelconque des revendications 7 à 10 et des composés polymérisables ou durcissables, la composition représentant de préférence un vernis, en particulier un vernis pour fils métalliques ou un vernis d'imprégnation, ou une résine d'imprégnation ou une résine de coulée.
